(19) Europäisches Patentamt
European Patent Office
Office européen des brevets

(11) **EP 4 439 698 B1**

(12) **EUROPEAN PATENT SPECIFICATION**


(45) Date of publication and mention of the grant of the patent:
**23.09.2026 Bulletin 2026/39**

(21) Application number: **23740453.8**

(22) Date of filing: **11.01.2023**

(51) International Patent Classification (IPC):
***H01M 4/131*** *(2010.01)* ***H01M 4/36*** *(2006.01)*
***H01M 4/525*** *(2010.01)* ***H01M 4/505*** *(2010.01)*
***H01M 4/1391*** *(2010.01)* ***H01M 4/04*** *(2006.01)*
***H01M 10/052*** *(2010.01)* ***H01M 4/02*** *(2006.01)*

(52) Cooperative Patent Classification (CPC):
**H01M 4/02; H01M 4/04; H01M 4/0404; H01M 4/0435; H01M 4/131; H01M 4/1391; H01M 4/36; H01M 4/364; H01M 4/505; H01M 4/525; H01M 4/62; H01M 10/052;**
H01M 2004/021; H01M 2004/028; Y02E 60/10

(86) International application number:
**PCT/KR2023/000516**

(87) International publication number:
**WO 2023/136609 (20.07.2023 Gazette 2023/29)**


(54) **POSITIVE ELECTRODE FOR LITHIUM SECONDARY BATTERY AND METHOD FOR MANUFACTURING SAME**

POSITIVELEKTRODE FÜR LITHIUMSEKUNDÄRBATTERIE UND VERFAHREN ZUR HERSTELLUNG DAVON

ÉLECTRODE POSITIVE POUR BATTERIE SECONDAIRE AU LITHIUM ET SON PROCÉDÉ DE FABRICATION


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.01.2022 KR 20220004160**

(43) Date of publication of application:
**02.10.2024 Bulletin 2024/40**



(73) Proprietor: **LG Energy Solution, Ltd.**
**Seoul 07335 (KR)**

(72) Inventors:
- **KIM, Jong Woo**
  **Daejeon 34122 (KR)**
- **HAN, Gi Beom**
  **Daejeon 34122 (KR)**
- **LHO, Eun Sol**
  **Daejeon 34122 (KR)**
- **JUNG, Wang Mo**
  **Daejeon 34122 (KR)**
- **PARK, Sang Min**
  **Daejeon 34122 (KR)**
- **LEE, Sang Wook**
  **Daejeon 34122 (KR)**
- **KIM, Seul Ki**
  **Daejeon 34122 (KR)**
- **KIM, Hyeong Il**
  **Daejeon 34122 (KR)**

(74) Representative: **Hoffmann Eitle**
**Patent- und Rechtsanwälte PartmbB**
**Arabellastraße 30**
**81925 München (DE)**



(56) References cited:
**EP-A1- 3 778 491**
**WO-A1-2021/025479**
**CN-A- 112 582 603**
**JP-A- 2014 032 803**
**JP-A- 2021 114 412**
**KR-A- 20120 084 652**
**KR-A- 20180 014 724**
**KR-A- 20190 051 864**
**US-A1- 2014 377 659**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a positive electrode for a lithium secondary battery having excellent electrochemical properties, and a method for manufacturing the same.

### BACKGROUND ART

A lithium secondary battery generally includes a positive electrode, a negative electrode, a separator, and an electrolyte. The positive electrode and the negative electrode include active materials capable of intercalation and deintercalation of lithium ions, and electrical energy is produced by oxidation and reduction reactions when lithium ions are intercalated and deintercalated from the positive electrode and the negative electrode.

The positive electrode of the lithium secondary battery is prepared by a method for applying a positive electrode active material to a current collector, rolling, and drying the same. Recently, there has been an increasing demand for a lithium secondary battery having a high energy density per unit volume so as to be applied to an electric vehicle, *etc*. However, when excessive rolling is performed in order to increase the energy density, there are limitations in that particle breakage of the positive electrode active material is not only easy to occur, but cracks also occur inside the particles.

In the case in which the particle breakage of the positive electrode active material or the cracks occur, since a contact area with the electrolyte solution increases, an amount of gas generated increases and the degradation of the active material is accelerated due to a side reaction with the electrolyte solution. As a result, life characteristics of the battery may be degraded.

Accordingly, there is a need to develop a method for distinguishing a positive electrode having an improved rolling state, which can exhibit excellent electrochemical properties when applied to a battery due to less occurrence of particle breakage and cracks.

EP 3 778 491 A1 describes a lithium composite metal compound represented by $Li[Li_x(Ni_{(1-y-z-w)}Co_yMn_zM_w)_{1-x}]O_2$ where M represents one or more elements selected from the group consisting of Mn, Fe, Cu, Ti, Mg, Al, W, B, Mo, Zn, Sn, Zr, Ga, Nb, and V, and $-0.10 \leq x \leq 0.2$, $0 < y \leq 0.2$, $0 \leq z \leq 0.2$, and $0 < y + z \leq 0.25$ are satisfied, and wherein physical property values of pores that are obtained from measurement of nitrogen adsorption and desorption isotherms at a liquid nitrogen temperature satisfy the following requirements (1) and (2): (1) a total pore volume determined from an amount of nitrogen adsorbed when a relative pressure (p/po) of an adsorption isotherm is 0.99 is 0.008 $cm^3/g$ or more and 0.012 $cm^3/g$ or less; and (2) in a pore distribution determined from a desorption isotherm by a BJH method, a proportion of a volume of pores of 15 nm or less with respect to a total pore volume of 200 nm or less is less than 50%.

### DISCLOSURE OF THE INVENTION

### TECHNICAL PROBLEM

An aspect of the present invention provides a positive electrode having excellent electrochemical properties due to less structural damage of particles even after rolling, and a method for manufacturing the same.

### TECHNICAL SOLUTION

The present invention provides a positive electrode for a lithium secondary battery including:

a positive electrode collector; and
a positive electrode active material layer which is formed on at least one surface of the positive electrode collector and includes a positive electrode active material, wherein the positive electrode active material comprises a lithium composite transition metal oxide represented by Formula 1 below, and
wherein the positive electrode active material layer has a pore volume of $7.0\times10^{-3}\cdot cm^3/g$ to $8.0\times10^{-3}\cdot cm^3/g$, as determined from a Barret-Joyner-Halenda plot in accordance with the method described below.

Also, the present invention provides a method for preparing a positive electrode for a lithium secondary battery, the method including:

coating at least one surface of a positive electrode collector with a positive electrode slurry containing a positive electrode active material to form a positive electrode active material layer, wherein the positive electrode active material comprises a lithium composite transition metal oxide represented by Formula 1 below; and

rolling the positive electrode collector and the positive electrode active material layer,
wherein the positive electrode active material layer after the rolling has a pore volume of $7.0\times10^{-3}\cdot cm^3/g$ to $8.0\times10^{-3}\cdot cm^3/g$ as determined from a Barret-Joyner-Halenda plot in accordance with the method described below.

## ADVANTAGEOUS EFFECTS

The positive electrode according to an embodiment of the present invention includes the positive electrode active material in which less particle breakage and internal cracks occur, and thus it is possible to improve the initial capacity, life characteristics, gas generation rate, and the like when applied to the lithium secondary battery.

## BRIEF DESCRIPTION OF THE DRAWINGS

FIG. 1 is a cross-sectional view of positive electrodes before and after rolling observed by a scanning electron microscope.
FIG. 2 shows a result of analyzing positive electrodes prepared in Examples and Comparative Examples of the present invention through a Barret-Joyner-Halenda (BJH) method.
FIG. 3 is a view showing capacity retentions and resistance increase rates measured while charging and discharging, 600 times, the batteries to which the positive electrodes prepared in Examples and Comparative Examples of the present invention are applied.
FIG. 4 is a view showing results of measuring an amount of gas generated after high-temperature storage in the batteries to which the positive electrodes prepared in Examples and Comparative Examples of the present invention are applied.
FIG. 5 is a view showing results of measuring the rolling density according to a mixing weight ratio of small particles and large particles in a positive electrode material having a bimodal particle size distribution.

## BEST MODE FOR CARRYING OUT THE INVENTION

Hereinafter, the present invention will be described in more detail to allow for a clearer understanding of the present invention.

As used herein, the term "primary particle" refers to a particle unit which is constituted by a plurality of crystallites, and in which an external grain boundary does not exist when observed in the view at a magnification of 5,000 to 20,000 using a scanning electron microscope. The term "average particle diameter of the primary particles" refers to an arithmetic mean value of the particle diameters calculated by measuring the particle diameters of the primary particles observed in the scanning electron microscope image.

As used herein, the term "secondary particle" is a particle formed by the aggregation of a plurality of primary particles.

As used herein, the term "$D_{50}$" refers to a particle size based on 50% of a volume cumulative particle size distribution of lithium composite transition metal oxide powder or positive electrode active material powder, and means $D_{50}$ of the secondary particle when the lithium composite transition metal oxide is a secondary particle. The $D_{50}$ may be measured using a laser diffraction method. For example, the lithium composite transition metal oxide powder or the positive electrode active material powder may be dispersed in a dispersion medium, then introduced into a commercially available laser diffraction particle size measuring apparatus (*e.g.*, Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter $D_{50}$.

In the present invention, "BET specific surface area" and "pore volume" are calculated from nitrogen adsorption isotherms in a 77-K liquid nitrogen atmosphere obtained using BELSORP-MAX (made from MicrotracBEL corp.), and the specific surface area is calculated through a multipoint Brunauer-Emmett-Teller (BET) method, and the pore volume is calculated using a Barret-Joyner-Halenda (BJH) plot with respect to pores having a diameter of 2-185 nm.

## Positive Electrode

First, a positive electrode for a lithium secondary battery according to the present invention will be described.

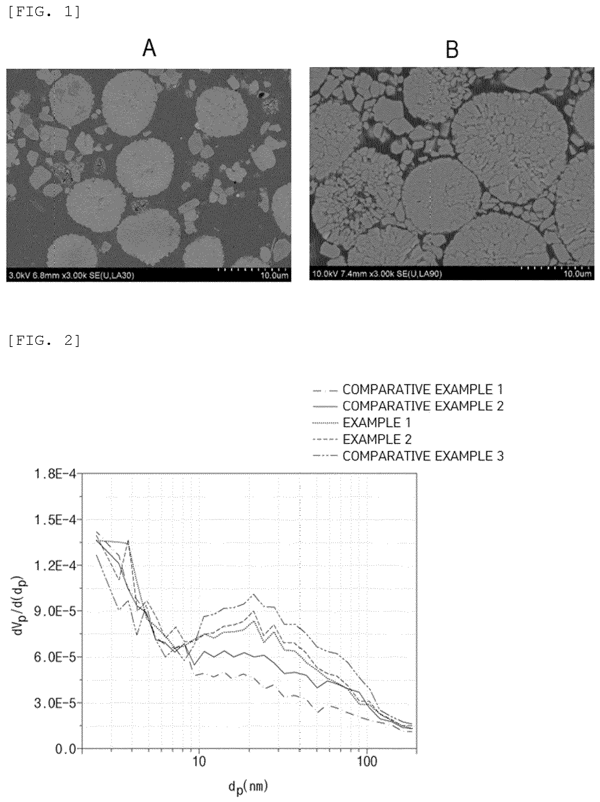

It is advantageous to prepare an electrode having a high rolling density in order to achieve a high energy density of the lithium secondary battery and to secure a high electric conductivity by contact between a current collector and an active material. However, as can be seen from FIG. 1, in which the surface A of the electrode before the rolling and the

surface B of the electrode after the rolling are observed through a scanning electron microscope (SEM), particle breakage in which the particle shape of the active material collapses according to the rolling condition is not only easy to occur, but also cracks may occur inside the particles.

Specifically, when the rolling density is excessively high, there is the disadvantage that the connection of the electrical conduction path is disconnected due to the breakage of the primary particles of the active material, or the reaction area with the electrolyte is increased, thereby intensifying gas generation. Therefore, the electrochemical performance of the electrode and the gas generation due to side reactions are greatly affected by the rolling characteristics.

Accordingly, the present inventors have devised a new parameter to select a positive electrode including an active material having a good particle state from positive electrodes in a rolled state, and specifically, have confirmed that in the positive electrode including a positive electrode collector and a positive electrode active material layer which is formed on at least one surface of the positive electrode collector and includes a positive electrode active material, if the positive electrode active material layer has a pore volume of $7.0\times10^{-3}\cdot cm^3/g$ to $8.0\times10^{-3}\cdot cm^3/g$, it is possible to contribute to improving the performance of a battery by including the positive electrode active material particles in an optimal state.

Specifically, if the pore volume of the positive electrode active material layer is $7.0\times10^{-3}\cdot cm^3/g$ or more, preferably $7.1\times10^{-3}\cdot cm^3/g$ or more, the contact between particles is sufficient, and thus the resistance may be reduced and the capacity of the cell can be increased. In addition, if the pore volume of the positive electrode active material layer is $8.0\times10^{-3}\cdot cm^3/g$ or less, and preferably $7.6\times10^{-3}\cdot cm^3/g$ or less, the degree of breakage of the active material particles inside the electrode is small and thus it is possible to prevent the phenomenon that gas generation inside the cell is intensified.

Meanwhile, in an embodiment of the present invention, the positive electrode material layer may have a BET specific surface area greater than 1.30 $m^2/g$ and less than 1.50 $m^2/g$, preferably, 1.32 $m^2/g$ to 1.48 $m^2/g$, and more preferably, 1.33 $m^2/g$ to 1.45 $m^2/g$. In this case, since the particle breakage of the active material inside the electrode is not excessive, and contact between the particles is sufficient, resistance characteristics may be improved.

In an embodiment of the present invention, the positive electrode collector is not particularly limited as long as it has conductivity without causing adverse chemical changes in the battery, and, for example, aluminum; stainless steel; nickel; titanium; sintered carbon; or aluminum or stainless steel that is surface-treated with one of carbon, nickel, titanium, silver, or the like may be used.

Meanwhile, the positive electrode active material is not particularly limited as long as it is a compound capable of reversible intercalation and deintercalation of lithium, but may include, for example, at least one selected from lithium composite transition metal oxides consisting of a lithium cobalt-based oxide, a lithium nickel-based oxide, a lithium nickel cobalt-based oxide, a lithium manganese-based oxide, a lithium nickel manganese-based oxide, a lithium phosphate-based oxide, and a lithium nickel cobalt manganese-based oxide.

Specifically, the positive electrode active material may include at least one selected from the group consisting of a lithium cobalt-based oxide such as $LiCoO_2$ (LCO); a lithium nickel-based oxide such as $LiNiO_2$ (LNO); a lithium nickel cobalt-based oxide such as $LiNi_{1-y4}Co_{y4}O_2$ ($0\leq y4<1$); a lithium manganese-based oxide such as $LiMnO_2$ (LMO), $LiMnO_3$, $LiMn_2O_3$, and $Li_2MnO_3$; a lithium nickel manganese-based oxide such as $Li_{1+y1}Mn_{2-y1}O_4$ ($0\leq y1\leq0.33$), $LiNi_{y2}Mn_{2-y2}O_4$ ($0\leq y2\leq2$), $LiNi_{y3}Mn_{2-y3}O_2$ ($0.01\leq y3\leq0.1$), and $Li_2NiMn_3O_8$; a lithium phosphate-based oxide such as $LiFePO_4$ and $LiCoPO_4$; and a lithium nickel cobalt manganese-based oxide represented by Formula 1 below.

In the present invention, the positive electrode active material includes a lithium composite transition metal oxide represented by Formula 1 below:

[Formula 1] $Li_{1+x}(Ni_aCo_bMn_cM_d)O_2$

In Formula 1 above,

M is at least any one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,

x, a, b, c, and d each satisfy $-0.2\leq x\leq0.2$, $0.50\leq a<1$, $0<b\leq0.25$, $0<c\leq0.25$, $0\leq d\leq0.1$, and $a+b+c+d=1$.

In addition, the positive electrode active material may include a lithium composite transition metal oxide containing at least 70 mol% of nickel with respect to the total number of moles of the transition metal, specifically, may include a lithium composite transition metal oxide in which in Formula 1 above, a, b, c, and d satisfy $0.70\leq a<1$, $0<b\leq0.20$, $0<c\leq0.20$, and $0\leq d\leq0.05$, respectively, and more specifically, may include a lithium composite transition metal oxide in which a, b, c, and d satisfy $0.80\leq a<1$, $0<b\leq0.15$, $0<c\leq0.15$, and $0\leq d\leq0.03$, respectively.

In an embodiment of the present invention, the positive electrode active material may be at least one selected from $Li(Ni_{0.83}Co_{0.05}Mn_{0.10}Al_{0.02})O_2$ and $Li(Ni_{0.86}Co_{0.05}Mn_{0.07}Al_{0.02})O_2$.

In addition, the positive electrode active material may include a small particle positive electrode active material and a large particle positive electrode active material having different $D_{50}$, and in this case, the rolling characteristics of the

electrode may be improved.

In this case, the small particle positive electrode active material may have $D_{50}$ of 2 $\mu$m to 5 $\mu$m, and the large particle positive electrode active material may have $D_{50}$ of 8 $\mu$m to 12 $\mu$m.

In an embodiment of the present invention, the weight ratio of the small particles to the large particles (*i.e.,* the weight of the small particle positive electrode active material/the weight of the large particle positive electrode active material) may be in a range of 1.0 to 2.0, preferably 1.2 to 1.8, and more preferably 1.5. That the small particles and the large particles are mixed in such a weight ratio is advantageous for achieving the high rolling density under various pressure conditions.

In an embodiment of the present invention, the porosity of the positive electrode active material layer may be 20% to 25%. Here, the porosity means a value calculated by Equation 1 below:

Porosity (%) of positive electrode active material layer = ((true density of positive electrode active material - electrode density)/true density of positive electrode active material)$\times$100 [Equation 1]

In Equation 1 above, the electrode density is a value calculated by Equation 2 below:

Electrode density = (weight of positive electrode - weight of positive electrode collector)/(a$\times$b$\times$c) [Equation 2]

In Equation 2 above, a, b, and c are the width, length, and height measured after separating the positive electrode collector from the positive electrode, respectively.

In an embodiment of the present invention, the thickness of the positive electrode active material layer may be different depending on the amount of the positive electrode slurry applied, but may be, for example, 50 $\mu$m to 54 $\mu$m, preferably 51 $\mu$m to 53 $\mu$m, and the total thickness of the positive electrode including the thickness of the positive electrode collector may be 60 $\mu$m to 100 $\mu$m. In this case, there is the advantage of improving the energy density and controlling the drying process. The thickness of the positive electrode was measured while the positive electrode was pulled as much as possible to make it flat.

**Method of Preparing Positive Electrode**

Next, a method for preparing the positive electrode for a lithium secondary battery will be described.

The method for preparing a positive electrode for a lithium secondary battery according to the present invention includes: coating at least one surface of a positive electrode collector with a positive electrode slurry containing a positive electrode active material to form a positive electrode active material layer, wherein the positive electrode active material comprises a lithium composite transition metal oxide represented by Formula 1 above; and rolling the positive electrode collector and the positive electrode active material layer, wherein the positive electrode active material layer after the rolling has a pore volume of $7.0\times10^{-3}\cdot cm^3/g$ to $8.0\times10^{-3}\cdot cm^3/g$ as determined from a Barret-Joyner-Halenda plot in accordance with the method described herein. Each component in the preparation method may cite the description of each component of the above-described positive electrode.

In an embodiment of the present invention, the positive electrode material layer after the rolling may have a BET specific surface area greater than 1.30 $m^2/g$ and less than 1.50 $m^2/g$, preferably, 1.32 $m^2/g$ to 1.48 $m^2/g$, and more preferably, 1.33 $m^2/g$ to 1.45 $m^2/g$.

In an embodiment of the present invention, the coating of the positive electrode slurry may be performed by coating the positive electrode slurry on at least one surface of the positive electrode collector at a loading amount of 350 $mg/25cm^2$ to 480 $mg/25cm^2$, and preferably 380 $mg/25cm^2$ to 460 $mg/25cm^2$.

In an embodiment of the present invention, the thickness of the positive electrode active material layer after the rolling may be 66% to 72%, preferably 68% to 72%, with respect to the thickness of the positive electrode active material layer before the rolling. In this case, the BET specific surface area and pore volume of the positive electrode active material may be adjusted within the range of the present invention while achieving an appropriate rolling density.

Meanwhile, the positive electrode slurry may further include a binder and/or a conductive agent in addition to the positive electrode active material, and may be prepared by dissolving them in a solvent.

The positive electrode active material may be included in an amount of 80 wt% to 99 wt%, specifically, 90 wt% to 99 wt% based on the total weight of solid content in the positive electrode slurry. In this case, when the amount of the positive electrode active material is 80 wt% or less, the energy density is reduced, and thus the capacity may be reduced.

The binder is a component that assists in the binding between the active material and the conductive agent and in the binding with the current collector, and may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone,

polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

In addition, the conductive agent is a material providing conductivity without causing adverse chemical changes in the battery, and may be added in an amount of 0.5 wt% to 20 wt% based on the total weight of the solid content in the positive electrode slurry.

For example, the conductive agent may be selected from among carbon black such as acetylene black, Ketjen black, channel black, furnace black, lamp black, or thermal black; graphite powder such as natural graphite, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; and a conductive material such as polyphenylene derivatives.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry containing the positive electrode active material, the binder, and the conductive agent is 40 wt% to 90 wt%, preferably, 60 wt% to 80 wt%.

In an embodiment of the present invention, the rolling step may be performed by a process of cutting the positive electrode collector coated with the positive electrode slurry to a width of 10 cm to 12 cm and a length of 3 cm to 4 cm, putting the cut positive electrode collector between two rollers, and compressing the cut positive electrode collector by adjusting the interval of the rollers.

## Lithium Secondary Battery

Next, a lithium secondary battery according to the present invention will be described.

The lithium secondary battery of the present invention includes the above-described positive electrode according to the present invention; a negative electrode; a separator interposed between the positive electrode and the negative electrode; and an electrolyte, and may be prepared by a conventional preparation method, except for using the positive electrode according to the present invention.

Meanwhile, the lithium secondary battery may further optionally include a battery container accommodating an electrode assembly of the positive electrode, the negative electrode, and the separator, and a sealing member for sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 μm to 500 μm, and, similar to the positive electrode collector, microscopic irregularities may be formed on the surface of the collector to improve the adhesion of the negative electrode active material. The negative electrode collector, for example, may be used in various shapes such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite;

carbon black such as acetylene black, Ketjen black, channel black, furnace black, lamp black, thermal black; carbon based materials such as carbon fibers, and carbon nanotubes; powder or fibers of metal such as copper, nickel, aluminum, or silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

The negative electrode active material layer may be prepared by, for example, coating, on a negative electrode collector, a negative electrode slurry containing a negative electrode active material, and optionally a binder and a conductive agent and drying the coated negative electrode collector, or by casting the negative electrode slurry on a separate support and then laminating a film separated from the support on the negative electrode collector.

The solvent of the negative electrode slurry may include water; or an organic solvent such as NMP and alcohol, and may be used in an amount such that desirable viscosity is obtained when the negative electrode active material, the binder, and the conductive agent are included. For example, the solvent may be included in an amount such that a concentration of the solid content in the negative electrode slurry including the negative electrode active material, the binder, and the conductive agent is 30 wt% to 80 wt%, preferably, 40 wt% to 70 wt%.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used as the lithium salt. It is preferable to use the lithium salt in a concentration range of 0.1 M to 5.0 M, preferably, 0.1 M to 3.0 M. When the

concentration of the lithium salt is included within the above range, the electrolyte may have suitable conductivity and viscosity, thereby exhibiting excellent performance, and lithium ions may effectively migrate.

In order to improve lifetime characteristics of the battery, suppress the reduction in battery capacity, and improve discharge capacity of the battery, additives may be additionally included in the electrolyte in addition to the above electrolyte components. For example, any one alone or a mixture of a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, an ammonium salt, pyrrole, 2-methoxy ethanol, or aluminum trichloride may be used as the additive, but the embodiment of the present invention is not limited thereto. The additive may be included in an amount of 0.1 wt% to 10 wt%, preferably, 0.1 wt% to 5 wt% with respect to the total weight of the electrolyte.

As described above, since the lithium secondary battery including the positive electrode according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

Hereinafter, examples of the present invention will be described in detail in such a manner that it may easily be carried out by a person with ordinary skill in the art to which the present invention pertains.

## MODE FOR CARRYING OUT THE INVENTION

### [Examples and Comparative Examples: Preparation of Positive Electrode]

#### Reference Experimental Example 1.

Before the preparation of the positive electrode, in order to confirm the proper mixing ratio of the small particles and the large particles, the rolling density value according to the mixing volume ratio of the bimodal positive electrode material was confirmed as follows.

Specifically, $Li(Ni_{0.83}Co_{0.05}Mn_{0.10}Al_{0.02})O_2$ having $D_{50}$ of 3.7 μm and $Li(Ni_{0.86}Co_{0.05}Mn_{0.07}Al_{0.02})O_2$ ($D_{50}$=10 μm) having $D_{50}$ of 9.8 μm were mixed in a weight ratio of 7:3, 6:4, 5:5, 4:6, and 3:7, respectively, to prepare positive electrode materials having a bimodal particle size distribution.

The rolling density of each prepared positive electrode material was measured using HPRM-1000. Specifically, 5 g of each positive electrode material prepared at each weight ratio was added to a cylindrical mold, and then the mold containing each positive electrode material was pressed at 2 tons. Thereafter, the height of the pressurized mold was measured with vernier calipers to determine rolling density.

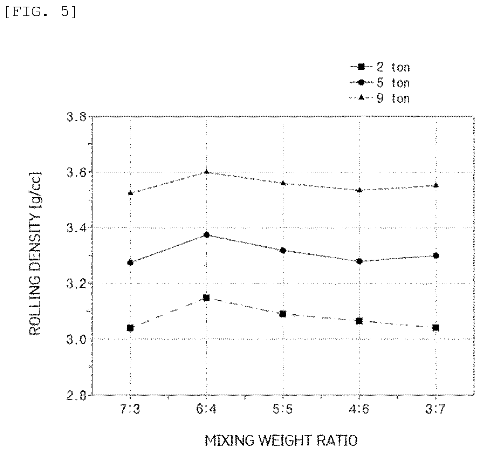

When the pressure applied to the mold was changed to 5 tons and then to 9 tons, the rolling density was also obtained by the same method, and the results are shown in FIG. 5.

From the results of FIG. 5, it can be confirmed that the rolling density was the highest when the mixing weight ratio of the small particles and the large particles was 6:4 under all pressure conditions of 2 tons, 5 tons, and 9 tons, and accordingly, and thus the corresponding weight ratio was applied in Examples below to prepare positive electrode materials.

#### Comparative Example 1.

$Li(Ni_{0.83}Co_{0.05}Mn_{0.10}Al_{0.02})O_2$ having $D_{50}$ of 3.7 μm and $Li(Ni_{0.86}Co_{0.05}Mn_{0.07}Al_{0.02})O_2$ ($D_{50}$=10 μm) having $D_{50}$ of 9.8 μm were mixed in a weight ratio of 6:4 to prepare a bimodal positive electrode material.

The positive electrode material, the conductive agent (carbon black), and the binder (polyvinylidene fluoride, PVdF) were mixed in an N-methyl-2-pyrrolidone (NMP) solvent at a weight ratio of 97.5:1.0:1.5 to prepare a positive electrode slurry (solid content: 76 wt%). The prepared positive electrode active material had a true density of 4.475 g/cc.

The positive electrode slurry was applied onto one surface of an aluminum current collector and then dried at 130 °C to prepare an electrode including an active material layer having a loading amount of 450 g/25cm$^2$. Now, the thickness of the active material layer was 75 μm. The electrode was cut to 11 cm×3.5 cm, inserted between two rollers, and an interval between the two rollers was adjusted at 25 °C to prepare a positive electrode having an active material layer with a thickness of 70 μm and a porosity of 42.5%.

**Comparative Example 2.**

A positive electrode was prepared in the same manner as in Comparative Example 1, except that the active material layer was rolled to have a thickness of 55 μm and a porosity of 26.8%.

**Comparative Example 3.**

A positive electrode was prepared in the same manner as in Comparative Example 1, except that the active material layer was rolled to have a thickness of 49 μm and a porosity of 17.8%.

**Example 1.**

A positive electrode was prepared in the same manner as in Comparative Example 1, except that the active material layer was rolled to have a thickness of 53 μm and a porosity of 24.0%.

**Example 2.**

A positive electrode was prepared in the same manner as in Comparative Example 1, except that the active material layer was rolled to have a thickness of 51 μm and a porosity of 21.1%.

**[Experimental Example 1: Measurement of BET Specific Surface Area and Pore Volume]**

Each of the positive electrodes prepared in Comparative Examples 1 to 3 and Examples 1 and 2 was cut into an area of 1.96 cm×1.96 cm, and sampled such that the weight of the entire positive electrode was 3.5 g or more for each positive electrode, and then introduced into BELSORP-MAX (MicrotracBEL corp.). Thereafter, the Brunauer-Emmett-Teller (BET) specific surface area of the positive electrode active material layer and the pore volume by means of the Barret-Joyner-Halenda (BJH) Plot were confirmed by subtracting the weight of the current collector. The BJH Plot is obtained with respect to pores having a diameter of 2 nm to 185 nm and is shown in FIG. 2, and the pore volume values calculated thereby are shown in Table 1 below.

[Table 1]

| | BET specific surface area ($m^2/g$) | Volume of pores ($10^{-3} \cdot cm^3/g$) |
|---|---|---|
| Comparative Example 1 | 1.08 | 4.807 |
| Comparative Example 2 | 1.29 | 6.508 |
| Example 1 | 1.33 | 7.196 |
| Example 2 | 1.45 | 7.531 |
| Comparative Example 3 | 1.51 | 8.719 |

**[Experimental Example 2: Battery Performance Evaluation]**

**(1) Initial Capacity Evaluation**

Each electrode assembly was prepared by interposing a porous polyethylene separator between each of the positive electrodes prepared in Examples 1 and 2 and Comparative Examples 1 to 3 and the lithium metal negative electrode, and then the electrode assembly was placed in a battery case. Thereafter, an electrolyte solution was injected into the case to manufacture a lithium secondary battery of a coin half cell, and the electrolyte solution was prepared by dissolving $LiPF_6$ having a concentration of 1 M in a mixed organic solvent obtained by mixing ethylene carbonate/dimethyl carbonate/diethyl carbonate in a volume ratio of 3:4:3. Each of the manufactured coin half cells was subjected to formation, and charged/discharged once at a charging/discharging rate of 0.1C/0.1C at room temperature (25 °C). At this time, the state charged/discharged once is set as the initial capacity and is shown in Table 2 below.

**(2) Life Characteristic Evaluation**

Lithium secondary batteries to which the positive electrodes of Examples 1 and 2 and Comparative Examples 2 and 3 were applied were manufactured in the same manner as the coin half cell except that the negative electrode

manufactured as follows was used instead of the lithium metal negative electrode.

Graphite in which artificial graphite and natural graphite were blended at a weight ratio of 8:2 as a negative electrode active material, styrene-butadiene rubber (SBR) as a binder, and carbon black as a conductive agent were mixed at a weight ratio of 97.6:0.8:1.6, and then added to water that is a solvent to prepare a negative electrode mixture slurry. A 10 μm thick copper (Cu) thin film, as a negative electrode collector, was coated with the negative electrode mixture slurry and dried, and the coated Cu thin film was then roll-pressed to prepare a negative electrode.

Each of the manufactured lithium secondary battery was subjected to a formation process at 25 °C at 0.1 C rate, and then the gas in the battery was removed through a degassing process. The gas-removed lithium secondary battery was charged at 25 °C to 4.2 V under a constant current/constant voltage (CC/CV) condition, 0.05 C cut-off charged, and discharged at 0.33 C rate to 2.5 V under a constant current (CC) condition.

That the charging/discharging is performed once was set as 1 cycle, the discharge capacity in the initial state (1 cycle) was measured using PNE-0506 charge/discharge equipment (manufacturer: PNE SOLUTION Co., Ltd., 5 V, 6 A), and the result is set forth as the initial capacity in Table 2 below.

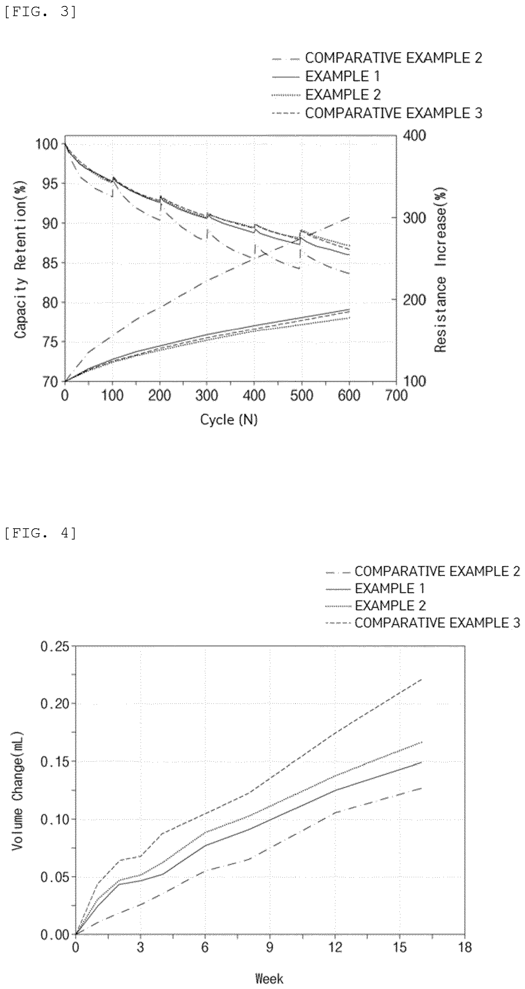

Thereafter, the results of measuring the discharge capacity retention by repeating the same charging/discharging 600 times are shown in FIG. 3, and the retention rate after performing charging/discharging 600 times was calculated with respect to the initial capacity, and the calculated value is set forth as the capacity retention in Table 2 below.

In addition, FIG. 3 shows the results of measuring the resistance increase rate with respect to the initial resistance by calculating DC-iR through the voltage drop that appears when the discharge pulse is applied at 1 C for 10 seconds after charging the battery so as to have an SOC of 50% at 25 °C, and the resistance increase rate after performing charging/discharging 600 times with respect to the initial resistance is calculated and set forth as the resistance increase rate in Table 2 below.

**(3) Volume Change Measurement**

The lithium secondary batteries to which the positive electrodes of Examples 1 and 2 and Comparative Examples 2 and 3 were applied were manufactured in the same manner as described in the life characteristic evaluation item, and each of the lithium secondary batteries was subjected to a formation process at 25 °C at 0.2 C rate, and then the gas in the battery was removed by a degassing process. Thereafter, the lithium secondary batteries were charged at 0.33 C rate at room temperature (25 °C) to 4.2 V under a constant current/constant voltage condition, 0.05 C cut-off charged, and discharged at 0.33 C to 2.5 V.

Thereafter, charging was performed under the same conditions as described above, and the lithium secondary batteries were fully charged up to an SOC of 100%. The volume of the fully charged battery was measured in a buoyancy manner at room temperature, and this was set as the initial volume.

The amount of gas generated was measured through the changed volume in the following manner while storing the batteries, of which the volume measurement was completed, at 60 °C for 16 weeks, and the results are shown in FIG. 4. During the volume measurement, each of the batteries was transferred to charge/discharge equipment at room temperature (25 °C), and then charged at 0.33 C rate to 4.2 V under a constant current/constant voltage condition, 0.05 C cut-off charged, and fully charged up to an SOC of 100% again. The volume of the fully charged battery was measured in a buoyancy manner at room temperature and the batteries were stored again at 60 °C. After the batteries were stored for 16 weeks, the difference between the measured volume and the initial volume was calculated and set forth as the amount of gas generated in Table 2.

[Table 2]

| | Comparative Example 1 | Comparative Example 2 | Example 1 | Example 2 | Comparative Example 3 |
|---|---|---|---|---|---|
| Initial Capacity (mAh/g) | 189.6 | 206.1 | 208.9 | 209.7 | 210.2 |
| Capacity retention (600cyc, %) | - | 83.69 | 86.05 | 87.20 | 86.71 |
| Resistance increase rate (600cyc, %) | - | 300.32 | 187.62 | 178.84 | 185.61 |
| Amount of gas generated (16 weeks, mL) | - | 0.127 | 0.149 | 0.166 | 0.220 |

From the results of Table 2, it can be confirmed that the batteries manufactured using the positive electrodes of Examples 1 and 2 in which the positive electrode active material layer satisfies the pore volume range of the present invention exhibited excellent initial capacity, capacity retention, resistance increase rate, and amount of gas generated.

Specifically, it can be confirmed that in the cases of Comparative Examples 1 and 2 using the positive electrode

having a pore volume of the positive electrode active material layer of less than $7.0\times10^{-3}\cdot cm^3/g$, the initial capacity is low or the resistance increase rate was very high. In addition, it can be seen that in the case of Comparative Example 3 using the positive electrode having a pore volume of the positive electrode active material layer of greater than $8.0\times10^{-3}\cdot cm^3/g$, the amount of gas generated was significantly increased.

## Claims

**1.** A positive electrode for a lithium secondary battery comprising:

a positive electrode collector; and
a positive electrode active material layer which is formed on at least one surface of the positive electrode collector and comprises a positive electrode active material, wherein the positive electrode active material comprises a lithium composite transition metal oxide represented by Formula 1 below; and
wherein the positive electrode active material layer has a pore volume of $7.0\times10^{-3}\cdot cm^3/g$ to $8.0\times10^{-3}\cdot cm^3/g$ as determined from a Barret-Joyner-Halenda plot in accordance with the method in the description:

[Formula 1] $Li_{1+x}(Ni_aCo_bMn_cM_d)O_2$

wherein
M is at least any one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy $-0.2\leq x\leq0.2$, $0.50\leq a<1$, $0<b\leq0.25$, $0<c\leq0.25$, $0\leq d\leq0.1$, and $a+b+c+d=1$.

**2.** The positive electrode of claim 1, wherein the positive electrode active material layer has a BET specific surface area of greater than 1.30 $m^2/g$ and less than 1.50 $m^2/g$ as determined in accordance with the method described in the description.

**3.** The positive electrode of claim 1, wherein the positive electrode active material comprises a small particle positive electrode active material and a large particle positive electrode active material having different $D_{50}$, wherein $D_{50}$ refers to a particle size based on 50% of a volume cumulative particle size distribution as determined by the laser diffraction method described in the description.

**4.** The positive electrode of claim 3, wherein the small particle positive electrode active material has $D_{50}$ of 2 $\mu$m to 5 $\mu$m.

**5.** The positive electrode of claim 3, wherein the large particle positive electrode active material has $D_{50}$ of 8 $\mu$m to 12 $\mu$m.

**6.** The positive electrode of claim 3, wherein the weight ratio of the small particle positive electrode active material to the large particle positive electrode active material is in a range of 1.0 to 2.0.

**7.** The positive electrode of claim 1, wherein in Formula 1, a, b, c, and d satisfy $0.80\leq a<1$, $0<b\leq0.15$, $0<c\leq0.15$, and $0\leq d\leq0.03$.

**8.** The positive electrode of claim 1, wherein the positive electrode active material comprises a lithium composite transition metal oxide containing at least 70 mol% of nickel with respect to the total number of moles of the transition metal.

**9.** The positive electrode of claim 1, wherein the positive electrode active material layer has a porosity of 20% to 25%, wherein porosity is a value calculated by Equation 1:

Porosity (%) of positive electrode active material layer = ((true density of positive electrode active material - electrode density)/true density of positive electrode active material)$\times$100; [Equation 1]

wherein in Equation 1 above, the electrode density is a value calculated by Equation 2 below:

Electrode density = (weight of positive electrode - weight of positive electrode collector)/(a$\times$b$\times$c) [Equation 2]

wherein in Equation 2 above, a, b, and c are the width, length, and height measured after separating the positive

electrode collector from the positive electrode, respectively.

**10.** A method for preparing a positive electrode for a lithium secondary battery, the method comprising:

coating at least one surface of a positive electrode collector with a positive electrode slurry containing a positive electrode active material to form a positive electrode active material layer, wherein the positive electrode active material comprises a lithium composite transition metal oxide represented by Formula 1 below; and
rolling the positive electrode collector and the positive electrode active material layer,
wherein the positive electrode active material layer after the rolling has a pore volume of $7.0\times10^{-3}\cdot cm^3/g$ to $8.0\times10^{-3}\cdot cm^3/g$ as determined from a Barret-Joyner-Halenda plot in accordance with the method in the description:

[Formula 1] $Li_{1+x}(Ni_aCo_bMn_cM_d)O_2$

wherein
M is at least any one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy $-0.2\leq x\leq 0.2$, $0.50\leq a<1$, $0<b\leq 0.25$, $0<c\leq 0.25$, $0\leq d\leq 0.1$, and $a+b+c+d=1$.

**11.** The method of claim 10, wherein the positive electrode active material layer after the rolling has a BET specific surface area of greater than 1.30 $m^2/g$ and less than 1.50 $m^2/g$ as determined in accordance with the method described in the description.

**12.** The method of claim 10, wherein the coating of the positive electrode slurry is performed by coating the positive electrode slurry on at least one surface of the positive electrode collector at a loading amount of 350 $mg/25cm^2$ to 480 $mg/25cm^2$.

**13.** The method of claim 10, wherein the thickness of the positive electrode active material layer after the rolling is 66% to 72% with respect to the thickness of the positive electrode active material layer before the rolling.

**14.** A lithium secondary battery comprising: the positive electrode for a lithium secondary battery according to claim 1; a negative electrode; a separator interposed between the positive electrode and the negative electrode; and an electrolyte.

**Patentansprüche**

**1.** Positive Elektrode für eine Lithium-Sekundärbatterie, umfassend:

einen positiven Elektrodenkollektor; und
eine Schicht aus aktivem Material der positiven Elektrode, die auf mindestens einer Oberfläche des positiven Elektrodenkollektors ausgebildet ist und ein aktives Material der positiven Elektrode umfasst, wobei das aktive Material der positiven Elektrode ein Lithium-Verbund-Übergangsmetalloxid umfasst, das durch die nachstehende Formel 1 dargestellt wird; und
wobei die Schicht aus aktivem Material der positiven Elektrode ein Porenvolumen von $7{,}0 \times 10^{-3}$ $cm^3/g$ bis $8{,}0 \times 10^{-3}$ $cm^3/g$ aufweist, bestimmt anhand eines Barret-Joyner-Halenda-Diagramms gemäß dem in der Beschreibung beschriebenen Verfahren:

[Formel 1] $Li_{1+x}(Ni_aCo_bMn_cM_d)O_2$

wobei
M mindestens ein Element ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
x, a, b, c und d jeweils die Bedingungen $-0{,}2 \leq x \leq 0{,}2$, $0{,}50 \leq a < 1$, $0 < b \leq 0{,}25$, $0 < c \leq 0{,}25$, $0 \leq d \leq 0{,}1$ und $a + b + c + d = 1$ erfüllen.

**2.** Positive Elektrode gemäß Anspruch 1, wobei die Schicht aus aktivem Material der positiven Elektrode eine spezifische BET-Oberfläche von mehr als 1,30 $m^2/g$ und weniger als 1,50 $m^2/g$ aufweist, bestimmt gemäß dem

in der Beschreibung beschriebenen Verfahren.

**3.** Positive Elektrode gemäß Anspruch 1, wobei das aktive Material der positiven Elektrode umfasst ein aktives Material der positiven Elektrode mit kleinen Partikeln und ein aktives Material der positiven Elektrode mit großen Partikeln, die unterschiedliche $D_{50}$-Werte aufweisen, wobei sich $D_{50}$ auf eine Partikelgröße bezieht, die auf 50 % der volumenkumulativen Partikelgrößenverteilung basiert, wie sie durch das in der Beschreibung beschriebene Laserbeugungsverfahren bestimmt wird.

**4.** Positive Elektrode gemäß Anspruch 3, wobei das aktive Material der positiven Elektrode mit kleinen Partikeln einen $D_{50}$-Wert von 2 $\mu$m bis 5 $\mu$m aufweist.

**5.** Positive Elektrode gemäß Anspruch 3, wobei das aktive Material der positiven Elektrode mit großen Partikeln einen $D_{50}$-Wert von 8 $\mu$m bis 12 $\mu$m aufweist.

**6.** Positive Elektrode gemäß Anspruch 3, wobei das Gewichtsverhältnis des aktiven Materials der positiven Elektrode aus kleinen Partikeln zum aktiven Material der positiven Elektrode mit großen Partikeln in einem Bereich von 1,0 bis 2,0 liegt.

**7.** Positive Elektrode gemäß Anspruch 1, wobei in Formel 1 a, b, c und d die Bedingungen $0,80 \leq a < 1$, $0 < b \leq 0,15$, $0 < c \leq 0,15$ und $0 \leq d \leq 0,03$ erfüllen.

**8.** Positive Elektrode gemäß Anspruch 1, wobei das aktive Material der positiven Elektrode ein Lithium-Verbund-Übergangsmetalloxid umfasst, das mindestens 70 Mol-% Nickel, bezogen auf die Gesamtmolzahl des Übergangsmetalls, enthält.

**9.** Positive Elektrode gemäß Anspruch 1, wobei die Schicht aus aktivem Material der positiven Elektrode eine Porosität von 20 % bis 25 % aufweist, wobei die Porosität ein gemäß Gleichung 1 berechneter Wert ist:

Porosität (%) der Schicht aus aktivem Material der positiven Elektrode = ((tatsächliche Dichte des aktiven Materials der positiven Elektrode - Elektrodendichte)/tatsächliche Dichte des aktiven Materials der positiven Elektrode) $\times$ 100; [Gleichung 1]

wobei in der obigen Gleichung 1 die Elektrodendichte ein Wert ist, der anhand der folgenden Gleichung 2 berechnet wird:

Elektrodendichte = (Gewicht der positiven Elektrode - Gewicht des positiven Elektrodenkollektors)/(a $\times$ b $\times$ c) [Gleichung 2]

wobei in der obigen Gleichung 2, a, b und c die Breite, Länge und Höhe sind, die jeweils nach dem Trennen des positiven Elektrodenkollektors von der positiven Elektrode gemessen werden.

**10.** Verfahren zur Herstellung einer positiven Elektrode für eine Lithium-Sekundärbatterie, wobei das Verfahren umfasst:

das Beschichten mindestens einer Oberfläche eines positiven Elektrodenkollektors mit einer positiven Elektroden-Aufschlämmung, die ein aktives Material der positiven Elektrode enthält, um eine Schicht aus aktivem Material der positiven Elektrode zu bilden, wobei das aktive Material der positiven Elektrode ein Lithium-Verbund-Übergangsmetalloxid umfasst, das durch die nachstehende Formel 1 dargestellt wird; und
das Walzen des positiven Elektrodenkollektors und der Schicht aus aktivem Material der positiven Elektrode, wobei die Schicht aus aktivem Material der positiven Elektrode nach dem Walzen ein Porenvolumen von $7,0 \times 10^{-3}$ cm$^3$/g bis $8,0 \times 10^{-3}$ cm$^3$/g aufweist, bestimmt anhand eines Barret-Joyner-Halenda-Diagramms gemäß dem in der Beschreibung beschriebenen Verfahren:

[Formel 1] $Li_{1+x}(Ni_aCo_bMn_cM_d)O_2$

wobei
M mindestens ein Element ist, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
x, a, b, c und d jeweils die Bedingungen $-0,2 \leq x \leq 0,2$, $0,50 \leq a < 1$, $0 < b \leq 0,25$, $0 < c \leq 0,25$, $0 \leq d \leq 0,1$ und a + b + c +

d = 1 erfüllen.

**11.** Verfahren gemäß Anspruch 10, wobei die Schicht aus aktivem Material der positiven Elektrode nach dem Walzen eine BET-spezifische Oberfläche von mehr als 1,30 $m^2/g$ und weniger als 1,50 $m^2/g$ aufweist, bestimmt gemäß dem in der Beschreibung beschriebenen Verfahren.

**12.** Verfahren gemäß Anspruch 10, wobei das Auftragen der positiven Elektroden-Aufschlämmung dadurch erfolgt, dass die positive Elektroden-Aufschlämmung auf mindestens eine Oberfläche des positiven Elektrodenkollektors aufgetragen wird in einer Auftragungsmenge von 350 mg/25cm$^2$ bis 480 mg/25cm$^2$.

**13.** Verfahren gemäß Anspruch 10, wobei die Dicke der Schicht aus aktivem Material der positiven Elektrode nach dem Walzen 66 % bis 72 % beträgt, bezogen auf die Dicke der Schicht aus aktivem Material der positiven Elektrode vor dem Walzen.

**14.** Lithium-Sekundärbatterie, umfassend: die positive Elektrode für eine Lithium-Sekundärbatterie gemäß Anspruch 1; eine negative Elektrode; einen zwischen der positiven Elektrode und der negativen Elektrode angeordneten Separator; und einen Elektrolyten.

## Revendications

**1.** Électrode positive pour une batterie secondaire au lithium comprenant :

un collecteur d'électrode positive ; et
une couche de matériau actif d'électrode positive, qui est formée sur au moins une surface du collecteur d'électrode positive et qui comprend un matériau actif d'électrode positive,
dans laquelle le matériau actif d'électrode positive comprend un oxyde de métal de transition composite au lithium représenté par la Formule 1 ci-dessous ; et
dans laquelle la couche de matériau actif d'électrode positive a un volume poreux de $7{,}0\times10^{-3}\cdot cm^3/g$ à $8{,}0\times10^{-3}\cdot cm^3/g$ tel que déterminé à partir d'une courbe de Barrett-Joyner-Halenda conformément à la méthode décrite dans la description :

[Formule 1] $Li_{1+x}(Ni_aCo_bMn_cM_d)O_2$

dans laquelle
M est au moins un élément quelconque choisi dans le groupe constitué par W, Cu, Fe, V, Cr, Ti, Zr, Zn, Al, In, Ta, Y, La, Sr, Ga, Sc, Gd, Sm, Ca, Ce, Nb, Mg, B, et Mo, et
X, a, b, c, et d satisfont chacun à $-0{,}2\leq x\leq0{,}2$, $0{,}50\leq a<1$, $0<b\leq0{,}25$, $0<c\leq0{,}25$, $0\leq d\leq0{,}1$, et $a+b+c+d=1$.

**2.** Électrode positive selon la revendication 1, dans laquelle la couche de matériau actif d'électrode positive a une surface spécifique BET supérieure à 1,30 $m^2/g$ et inférieure à 1,50 $m^2/g$ telle que déterminée conformément à la méthode décrite dans la description.

**3.** Électrode positive selon la revendication 1, dans laquelle le matériau actif d'électrode positive comprend un matériau actif d'électrode positive à petites particules et un matériau actif d'électrode positive à grosses particules ayant des $D_{50}$ différents, dans laquelle $D_{50}$ se rapporte à une taille de particule basée sur 50 % d'une distribution cumulative en volume de taille de particule comme déterminée par le procédé de diffraction laser décrit dans la description.

**4.** Électrode positive selon la revendication 3, dans laquelle le matériau actif d'électrode positive à petites particules a un $D_{50}$ allant de 2 $\mu$m à 5 $\mu$m.

**5.** Électrode positive selon la revendication 3, dans laquelle le matériau actif d'électrode positive à grosses particules a un $D_{50}$ allant de 8 $\mu$m à 12 $\mu$m.

**6.** Électrode positive selon la revendication 3, dans laquelle le rapport pondéral du matériau actif d'électrode positive à petites particules au matériau actif d'électrode positive à grosses particules est dans une plage allant de 1,0 à 2,0.

**7.** Électrode positive selon la revendication 1, dans laquelle dans la Formule 1, a, b, c, et d satisfont à $0{,}80\leq a<1$,

$0<b\leq 0{,}15$, $0<c\leq 0{,}15$, et $0\leq d\leq 0{,}03$.

**8.** Électrode positive selon la revendication 1, dans laquelle le matériau actif d'électrode positive comprend un oxyde de métal de transition composite au lithium contenant au moins 70 mol% de nickel par rapport au nombre total de moles du métal de transition.

**9.** Électrode positive selon la revendication 1, dans laquelle la couche de matériau actif d'électrode positive a une porosité allant de 20 % à 25 %, dans laquelle la porosité est une valeur calculée par l'Équation 1 :

Porosité (%) de la couche de matériau actif d'électrode positive = ((densité réelle du matériau actif d'électrode positive - densité de l'électrode) /densité réelle du matériau actif d'électrode positive)$\times$100 ; [Equation 1]

dans l'Équation 1 ci-dessus, la densité de l'électrode est une valeur calculée par l'Équation 2 ci-dessous :

Densité de l'électrode = (poids de l'électrode positive - poids du collecteur d'électrode positive)/(a$\times$b$\times$c) [Equation 2]

dans l'Équation 2 ci-dessus, a, b, et C sont respectivement la largeur, la longueur et la hauteur mesurées après séparation du collecteur d'électrode positive de l'électrode positive.

**10.** Procédé de préparation d'une électrode positive pour une batterie secondaire au lithium, le procédé comprenant :

le fait d'appliquer, sur au moins une surface d'un collecteur d'électrode positive, une suspension d'électrode positive contenant un matériau actif d'électrode positive pour former une couche de matériau actif d'électrode positive, dans lequel le matériau actif d'électrode positive comprend un oxyde de métal de transition composite au lithium représenté par la Formule 1 ci-dessous ; et
le fait de calandrer le collecteur d'électrode positive et la couche de matériau actif d'électrode positive,
dans laquelle la couche de matériau actif d'électrode positive après le calandrage a un volume poreux de $7{,}0\times10^{-3}$ $cm^3/g$ à $8{,}0\times10^{-3}$ $cm^3/g$ tel que déterminé à partir d'une courbe de Barrett-Joyner-Halenda conformément à la méthode décrite dans la description :

[Formule 1] $Li_{1+x}(Ni_aCo_bMn_cM_d)O_2$

dans laquelle
M est au moins un élément choisi dans le groupe constitué par W, Cu, Fe, V, Cr, Ti, Zr, Zn, Al, In, Ta, Y, La, Sr, Ga, Sc, Gd, Sm, Ca, Ce, Nb, Mg, B, et Mo, et
x, a, b, c, et d satisfont chacun à $-0{,}2\leq x\leq 0{,}2$, $0{,}50\leq a<1$, $0<b\leq 0{,}25$, $0<c\leq 0{,}25$, $0\leq d\leq 0{,}1$, et $a+b+c+d=1$.

**11.** Procédé selon la revendication 10, dans lequel la couche de matériau actif d'électrode positive a, après le calandrage, une surface spécifique BET supérieure à 1,30 $m^2/g$ et inférieure à 1,50 $m^2/g$ telle que déterminée conformément à la méthode décrite dans la description.

**12.** Procédé selon la revendication 10, dans lequel l'application de la suspension d'électrode positive est réalisée par application de la suspension d'électrode positive sur au moins une surface du collecteur d'électrode positive à une charge surfacique de 350 mg/25 $cm^2$ à 480 mg/25 $cm^2$.

**13.** Procédé selon la revendication 10, dans lequel l'épaisseur de la couche de matériau actif d'électrode positive après le calandrage va de 66 % à 72 % par rapport à l'épaisseur de la couche de matériau actif d'électrode positive avant le calandrage.

**14.** Batterie secondaire au lithium comprenant : l'électrode positive pour une batterie secondaire au lithium selon la revendication 1 ; une électrode négative ; un séparateur interposé entre l'électrode positive et l'électrode négative ; et un électrolyte.

[FIG. 1]

A
B
3.0kV 6.8mm x3.00k SE(U,LA30)
10.0um
10.0kV 7.4mm x3.00k SE(U,LA90)
10.0um

[FIG. 2]

COMPARATIVE EXAMPLE 1
COMPARATIVE EXAMPLE 2
EXAMPLE 1
EXAMPLE 2
COMPARATIVE EXAMPLE 3
1.8E-4
1.5E-4
1.2E-4
9.0E-5
6.0E-5
3.0E-5
0.0
dVp/d(dp)
10
100
dp(nm)

[FIG. 3]

COMPARATIVE EXAMPLE 2
EXAMPLE 1
EXAMPLE 2
COMPARATIVE EXAMPLE 3
Capacity Retention(%)
Resistance Increase(%)
Cycle (N)
100
95
90
85
80
75
70
400
300
200
100
0
100
200
300
400
500
600
700

[FIG. 4]

COMPARATIVE EXAMPLE 2
EXAMPLE 1
EXAMPLE 2
COMPARATIVE EXAMPLE 3
Volume Change(mL)
Week
0.25
0.20
0.15
0.10
0.05
0.00
0
3
6
9
12
15
18

[FIG. 5]

2 ton
5 ton
9 ton
3.8
3.6
3.4
3.2
3.0
2.8
ROLLING DENSITY [g/cc]
7:3
6:4
5:5
4:6
3:7
MIXING WEIGHT RATIO

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3778491 A1